# EUROPEAN PATENT SPECIFICATION

(11) **EP 1 452 789 B1**
(45) Date of publication and mention of the grant of the patent: **19.07.2006**
(21) Application number: 03425131.4
(22) Date of filing: 28.02.2003
(51) Int. Cl.: F16L 19/00

(54) **Threaded fastener locking device for connections of tubes**
Sicherungsvorrichtung für Gewindeverbindungsteile von Rohren
Dispositif de blocage pour éléments de fixation filetées pour tuyaux

(43) Date of publication of application: 01.09.2004
(73) Proprietor: F.I.P. Formatura Iniezione Polimeri S.p.A, 16015 Casella (Genova) (IT); Aliaxis R&D S.A.S., 78540 Vernouillet (FR)
(72) Inventor: Mazzacano, Corrado, c/o F.I.P. Formatura, 16015 Casella (Genova) (IT); Bisio, Andrea, c/o F.I.P. Formatura, 16015 Casella (Genova) (IT)
(74) Representative: Crippa, Paolo Ernesto

(56) References cited:
- DE-A- 3 102 335
- DE-U- 29 907 603

## Description

The present invention relates to a anti-unscrewing device for a not-connection of a tube connecting system, particularly a system for connecting tubes to valves or to similar components, as for example in systems for conveying and distributing fluids.

In order to optimise and cost-reduce fluid conveying and distributing systems, such as hydraulic circuits, that include a variety of different tubings and valves, e.g. directional control valves, regulator valves, drain valves, damping valves, delivery valves or selector valves, the valves are usually produced independently of the tubes and only connected to them when the hydraulic circuit is being put together.

This allows of a high degree of specialization and standardization during the prefabrication of the tubes, by for example extrusion, and of the valves, by for example casting or moulding.

During the assembly of for example a hydraulic circuit, the valves and tubes are connected to each other in such a way as to allow the desired functions to be performed.

In the prior art three principal systems of connection between valves and tubes may be identified.

In one connection system the tube is made integral, for example by welding or brazing, with the connection portion of the valve body.

This type of connection between valve and tube is expensive to realize, is limited to few materials and is practically irreversible, preventing future changes to the hydraulic circuit or replacement of components.

In a second connection system, the tube, which must necessarily be flexible or deformable within certain limits, is fitted around the connection portion of the valve and tightened onto it by shrinking it on or by the elastic stress of the tube itself or by special clamping rings.

This type of connection has high costs of both assembly and disassembly and is not applicable to hydraulic systems or systems for conveying and/or distributing fluids at high pressure. Moreover, the connection itself is prone to undesirable loosening caused by vibrations, so-called fluid hammer and other mechanical stresses to which the hydraulic circuit is subject.

In a third connection system, the valve has an externally threaded connection portion and the tube, which may or may not be flexible has an internally threaded nut attached to it for screwing onto the threaded connection portion so as to tighten the end of the tube against the latter.

This type of connection, though easy to assemble, has the disadvantage of undesirable slackening of the connection caused partly by the limited total length of the thread, and partly by the mechanical stress of pressure variations, vibrations and fluid hammer in the fluid circuit, in addition to the actuation of the valves themselves, which is typically done mechanically or electromagnetically and is often cyclical.

It is therefore an object of the present invention to provide a system for connecting tubes to components in fluid conveying and distributing systems whose characteristics are such as to obviate the disadvantages cited with reference to the prior art, e.g. EP 0 535 867. This object is achieved by means of a anti-unscrewing device for the connection of the tubular ends of two components in systems for conveying or distributing fluids by means of a nut attached to the one, and capable of being screwed onto the other, of the said tubular ends to connect the said ends, comprising the features of claim 1. The anti-unscrewing device is connectable to one of the components and comprises:
- at least one opposing element possessing at least one first opposing surface that is effectively complementary to a second opposing surface formed on the said nut, the said opposing element being moveable from an engaged position in which the first opposing surface engages with the second opposing surface, preventing the nut working loose, to a disengaged position in which the nut can be undone, the said opposing element being influenced in such a way as to position itself from the disengaged position to the engaged position and vice versa; and
- locking means acting on the opposing element to lock it in the said engaged position.

In order that the invention may be better understood and its advantages appreciated more fully, a number of non-restrictive illustrative emobodiments thereof will now be described with reference to the appended drawings, in which:

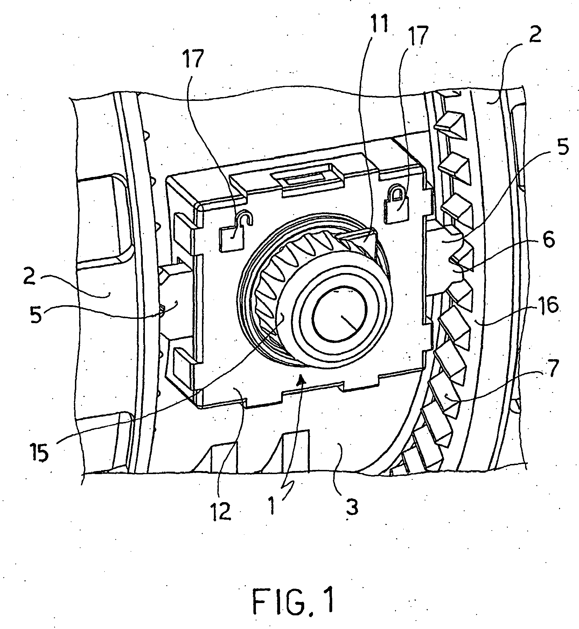

Figure 1 is a perspective view of an embodiment of the anti-unscrewing device according to the invention;

Figure 2 is a plan view of another embodiment of the device according to the invention in one stage of operation;

Figure 3 is a cross section on III-III as marked in Figure 2;

Figure 4 is a plan view of the device of Figure 2 in another stage of operation;

Figure 5 is a cross section on V-V as marked in Figure 4;

Figure 6 is plan view of the device shown in Figure 2 in another stage of operation; and

Figure 7 is a cross section on VII-VII in Figure 6.

Referring to the figures, a anti-unscrewing device is indicated as a whole by the reference number 1. The anti-unscrewing device 1 is designed to lock the connection, made by a nut 2, between the tubular ends of two components, such as a tube (not shown in the figures) and a valve 3, in fluid conveying or distributing systems. The said nut 2 is connected or connectable to the tubular end of one of the components, e.g. the tube, and can be screwed onto the tubular end of the other component, e.g. a threaded portion 4 of the valve 3, to place the said valve 3 and the said tube in fluid communication.

The anti-unscrewing device 1 is connectable to or formed on one of the components, preferably on the outer surface of the valve 3, and comprises at least one opposing element on which is at least a first opposing surface effectively complementary to a second opposing surface formed on the said nut 2. The opposing element, preferably a moveable slide 5, is moveable between an engaged position, in which the first opposing surface engages with the second opposing surface to prevent the nut 2 coming undone, and a disengaged position which does allow it to be undone. The said first opposing surface advantageously comprises one or more stop teeth 6 and the said second opposing surface comprises teeth or notches 7 complementary to the stop teeth 6.

The anti-unscrewing device 1 also includes locking means, preferably a cam 8, so arranged as to be able to act on the opposing element, and in particular on an actuating surface 9 thereof, to lock it in the engaged position.

The anti-unscrewing device 1 advantageously also includes elastic means, preferably one or more springs 10, acting on the opposing element to push it elastically into the engaged position.

An additional advantage is in providing indicator means, preferably position pointers connected to the locking means, to indicate locking and disengagement of the opposing element.

Where it is intended that there should be double locking of a single nut 2, or locking of two independent nuts 2 designed for example to connect two tubes to a valve 3, the anti-unscrewing device advantageously comprises two opposing elements arranged in such a way that they can be locked simultaneously by the same locking means. In particular, the actuating surfaces 9 of the stop elements are preferably effectively face to face with a gap between them, and the locking means, for example the cam 8, are arranged between the said actuating surfaces 9 so as to actuate them simultaneously.

Advantageously, the abovementioned elastic means comprise at least one compressed spring 10 in abutment against the said two mutually opposing actuating surfaces 9 to keep the two opposing elements apart and push them elastically into their engaged positions.

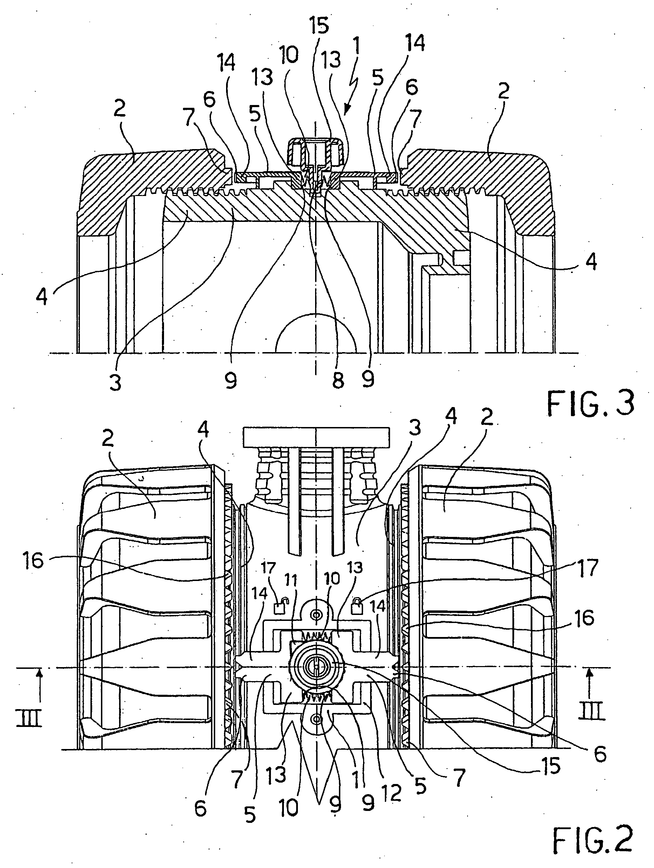

In the preferred embodiment, shown for example in Figures 2 and 3, the anti-unscrewing device 1 is mounted on a valve 3 with two threaded connecting portions 4 on opposite sides from each other and in axial alignment, for the removable connection, using the nuts 2, of two tubes (not shown) one on either side, to the valve 3.

The anti-unscrewing device 1 comprises a housing 12, preferably but not necessarily rectangular, connected to the outer surface of the valve body between the two connecting portions 4. The housing preferably defines two openings on opposite sides from each other and facing towards the portions 4 and hence towards the nuts 2, and partly houses two mutually opposing sliders 5 with a gap between them.

The sliders 5 are moveably supported in the said housing 12 which guides their movements, and are preferably approximately T-shaped with a broad end 13 inside the housing 12 and an opposing elongate end 14 projecting through the openings of the housing 12 towards the portions 4, in other words towards the nuts 2 which are screwed onto these. The broad end 13 of the slider 5 has an actuating surface 9 facing generally in the direction of disengagement of that slider 5 while the elongate end 14 has one or more, preferably two, stop teeth 6 forming the abovementioned first opposing surfaces.

In the space between the sliders 5, that is in the space between the said actuating surfaces 9, is a cam 8 rotatably supported, preferably by the housing 12 or by the valve 3, which is integral in rotation with a control knob 15 situated on the outside of that housing 12.

The relationship between the cam 8 and the actuating surfaces 9 is such as to allow the sliders 5 to be simultaneously locked in their engaged position by turning the control knob 15 to position the cam 8.

The knob 15 itself possesses a pointer indicating the rotational position of the cam. This may be a coloured line or a projection 11, and suitable reference marks are formed on the housing 12 or on the adjacent outer surface of the valve 3, such as symbols 17 depicting a closed and open padlock or the words "unlocked" and "locked", in the positions in which the abovementioned projection 11 is located when the stop element is disengaged and locked.

Two compressed springs 10, one on either side of the cam 8, are positioned in abutment against the actuating surfaces 9.

The nuts 2 comprise, as mentioned at the outset, at least a second opposing surface effectively complementary to the first opposing surface, that is to the stop teeth 6 of the opposing elements. In particular, the said second opposing surface takes the form of a toothed ring 16 formed on a frontal surface of the tubular body of the nut 2, facing the anti-unscrewing device 1. The said toothed ring 16 forms a continuous annular succession of teeth or notches 7 capable of engaging with the stop teeth 6 of the opposing element 5 in any rotational position of the nut 2.

The slope of the first and second stop surfaces, that is of the stop teeth 6 and notches 7, and their elastic engagement, by means of springs 10 allow that, when the opposing element is disengaged, the nut 2 can be tightened up or slackened with a click action.

The operation of the anti-unscreving device according to the invention is described below.

The connection of a tube to the threaded portion 4 of the valve 3 takes place as described below.

The tube with the nut attached is lined up with and placed against the threaded portion 4 and the nut 2 is screwed on, by hand or with suitable tools, to the said portion 4.

While the nut 2 is being screwed onto the threaded portion 4 the opposing sliders 5 are disengaged. This means that the cam 8 is parked in a position that allows the actuating surfaces to be brought towards each other so that the sliders can be moved into their disengaged position, in other words the stop teeth 6 are withdrawn from the toothed ring 16 of the nut 2 (Figures 2 and 3).

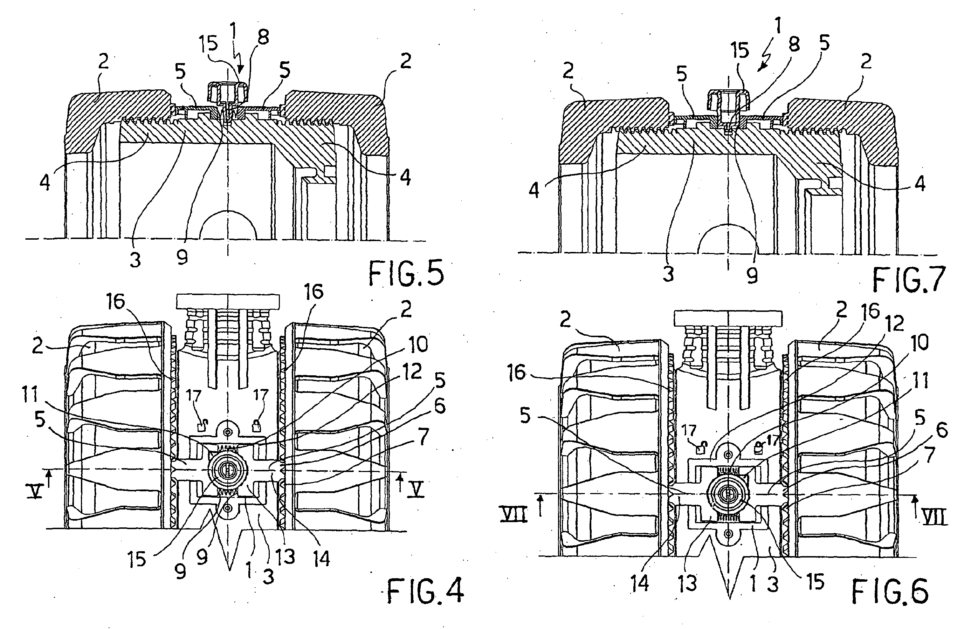

Because of the elastic force applied by the springs 10 to both actuating surfaces 9, the sliders 5 are held elastically in the engaged position and the stop teeth 6 click elastically into the notches 7, but, because of the slope of the stop surfaces, these surfaces slide against each other and allow the nut to be screwed home with a clicking action (Figure 4 and 5).

Once tight, the nut 2 is locked by turning the cam 8, using the knob 15, in a position that prevents the actuating surfaces 9 approaching each other. This locks the sliders 5 in the engaged position, that is, in an extended position in which the stop teeth 6 engage in the notches 7 on the toothed ring 16 of the nut 2, which therefore cannot work loose (Figures 6 and 7).

During operation, e.g. of the hydraulic circuit, it is quite impossible for the nut 2 to work loose in spite of the mechanical stresses caused by vibrations and sudden swings of temperature and pressure or by the operation of the valve itself. As a consequence the connection between the tube and the valve is very safe and reliable.

To disconnect or replace the tube or valve, the opposing elements, namely the moveable sliders 5, are unlocked by simply turning the cam 8 and the nuts 2 are unscrewed from the threaded connecting portions 4.

The anti-unscrewing device according to the invention has numerous advantages. Connection and disconnection are quick and simple and do not require skilled staff, and the nut is locked securely and gives a safe and durable connection between tubes and valves

More specifically, the anti-unscrewing device according to the invention enables the nut to be locked in any position of rotation and stops it working lose even in the event of vibrations and other mechanical stresses.

It will be clear that variants and/or additions to the device described above and illustrated may be envisaged without departing from the scope of the invention itself.

For example, the opposing element may consist of a pivoting lever with one or more teeth on one end acting as the said first opposing surfaces, and an actuating surface on which the locking means act.

In accordance with another embodiment, the locking means comprise a wedge acting on preferably sloping actuating surfaces. The said wedge is operated by hand, for example by a control slider, and locks the opposing element or elements in the engaged position.

In accordance with yet another embodiment, the locking means comprise a pivoting lever that acts on the actuating surface of the opposing element to lock it in the engaged position.

Both the valve body of the valve and the anti-unscrewing device are preferably moulded from synthetic material such as polypropylene or PVC. As an alternative, they may be made of metal.

## Claims

1. Anti-unscrewing device (1) for a nut-connection of the tubular ends of two components (3) in systems for conveying or distributing fluids, wherein a nut (2) is attached to the tubular end of one of the components, and capable of being screwed onto the tubular end of the other component, to connect the said ends,
wherein the said anti-unscrewing device (1) is connectable to one of the components (3) and comprises:
- at least one opposing element (5) possessing at least one first opposing surface (6) that is effectively complementary to a second opposing surface (7) formed on the said nut (2), the said opposing element (5) being moveable from an engaged position in which the first opposing surface (6) engages with the second opposing surface (7), preventing the nut (2) working loose, to a disengaged position in which the nut (2) can be undone, and vice versa; and
- elastic means (10) capable of elastically pushing the said opposing element (5) into said engaged position;
- locking means (8) acting on the opposing element (5) to lock it in the said engaged position.

2. Device (1) according to Claim 1, in which the elastic means (10) act on said opposing element (5) which is constantly elastically pushed in the said engaged position.

3. Device (1) according to Claim 1 or 2, comprising elastic means (10) capable of elastically pushing the said opposing element (5) into the said engaged position.

4. Device (1) according to Claim 1, 2 or 3, in which the said opposing element (5) is a moveable slider (5) with one or more stop teeth (6) on one end acting as the said first opposing surfaces.

5. Device (1) according to Claim 1, 2 or 3, in which the said opposing element (5) is a pivoting lever with one or more stop teeth on one end acting as the said first opposing surfaces.

6. Device (1) according to any one of the previous claims, in which the said locking means (8) comprise a cam (8) and/or a wedge and/or a lever acting on an actuating surface (9) of the opposing element (5).

7. Device (1) according to any one of the previous claims, in which the said locking means (8) comprise manual means of actuation (15).

8. Device (1) according to any one of the previous claims, comprising indicator means (11) to indicate locking and disengagement of the opposing element (5).

9. Device (1) according to Claim 8, in which the said indicator means comprise a visual position pointer (11) connected to the locking means (8).

10. Device (1) according to any one of the previous claims, comprising a housing (12) connected or connectable to the said component (3), wherein the said housing at least partly accommodates the said locking means (8) and the said at least one opposing element (5), wherein the housing (12) forms a guide for the movement of the opposing element (5).

11. Device (1) according to Claim 10, in which the said locking means comprise a cam (8) which is supported rotatably and is integral in rotation with an actuating knob (15) situated on the outside of the said housing (12).

12. Device (1) according to Claim 11, in which the said knob (15) has a pointer (11) for indicating the position of rotation of the cam (8), and suitable reference marks (17) are provided, in the engaged and disengaged positions, on the said housing (12).

13. Device (1) according to any one of the previous claims, comprising two opposing elements (5) so arranged that their actuating surfaces (9) are actuated simultaneously by the same locking means (8).

14. Device (1) according to Claim 13, in which each of the two opposing elements (5) is capable of preventing a respective nut (2) coming undone.

15. Device (1) according to Claim 13 or 14, in which the actuating surfaces (9) of the said two opposing elements (5) are face to face with a gap between them and the said locking means (8) is arranged between the said actuating surfaces (9).

16. Device (1) according to Claim 15, in which the said elastic means comprise at least one compressed spring (10) in abutment against the said actuating surfaces (9) to keep the opposing elements (5) apart and push them towards their engaged positions.

17. Device (1) according to Claim 16, in which there are two springs (10) arranged on two opposite sides of the locking means (8) between the said two actuating surfaces (9).

18. Device (1) according to any one of the previous claims, as dependent on Claim 3, in which the said elastic means (10) provide an elastic force pushing the first opposing surfaces (6) against the second opposing surfaces (7), and the said opposing surfaces (6, 7) have slopes as to allow the nut (2) to be screwed and/or unscrewed with a click action.

19. Device (1) according to any one of the preceding claims, comprising the nut (2), the said nut (2) comprising the at least one second opposing surface (7) that is effectively complementary to a first opposing surface (6).

20. Device (1) according to Claim 19, wherein the nut (2) comprises a toothed ring (16) forming the said second opposing surface (7).

21. Device (1) according to Claim 20, in which the said toothed ring (16) is formed on a frontal surface of the tubular body of the nut (2), facing the said first opposing surface (6) of the opposing element (5) of the device (1).

22. Component (3) for a system for conveying or distributing fluids, the said component being provided with a tubular connecting end (4) and with a anti-unscrewing device (1) according to any one of claims 1 to 18.

23. Component (3) according to Claim 22, in which the said component is a valve (3) with two threaded connecting portions (4), one on either side, and a anti-unscrewing device (1) according to one of Claims 13 to 18.

24. Component according to either of Claims 22 and 23, comprising one or more anti-unscrewing devices (1) with nuts (2) according to Claims 19 to 21.

25. Device (1) according to claim 19, wherein at least one of the said opposing surfaces (6) and (7) extends effectively along the circumference of the nut (2) to allow the opposing surfaces (6, 7) to be engaged in different positions of rotation of the nut (2).

## Patentansprüche

1. Anti-Losschraub-Vorrichtung (1) für eine Mutter-Verbindung von röhrenförmigen Enden zweier Bestandteile (3) in Systemen zur Beförderung oder Verteilung von f lui den worin ein Mutter (2) an dem röhrenförmigen Ende eines der Bestandteile befestigt ist, auf das röhrenförmige Ende des anderen Bestandteils aufschraubbar ist, um die Enden zu verbinden, worin die Anti-Losschraub-Vorrichtung (1) mit einem der Bestandteile (3) verbindbar ist und umfasst:
- wenigstens ein entgegenwirkendes Element (5), weiches wenigstens eine erste entgegenwirkende Fläche (6) aufweist, die im Wesentlichen komplementär zu einer zweiten entgegenwirkende Fläche (7) ist, die auf der Mutter (2) ausgebildet ist, wobei das entgegenwirkende Element (5) aus einer Eingriffsstellung, bei der die erste entgegenwirkende Fläche (6) mit der zweiten entgegenwirkenden Fläche (7) in Eingriff steht, und verhindert wird, dass die Mutter (2) sich lockert, in eine Lösestellung, bei der die Mutter (2) gelöst werden kann, und umgekehrt bewegbar ist, und
- elastische Mittel (10), die es ermöglichen, das entgegenwirkende Element (5) elastisch in die Eingriffstellung zu drücken;
- Verriegelungsmittel (8), die auf das entgegenwirkende Element (5) einwirken, um es in der Eingriffsstellung zu verriegeln.

2. Vorrichtung (1) gemäß Anspruch 1, in der das elastische Mittel (10) auf das entgegenwirkende Element (5) einwirkt, das fortlaufend elastisch in die Eingriffstellung gedrückt wird.

3. Vorrichtung (1) gemäß Anspruch 1 oder 2, umfassend elastische Mittel (10), die es ermöglichen, das entgegenwirkende Element (5) elastisch in die Eingriffstellung zu drücken

4. Vorrichtung (1) gemäß Anspruch 1, 2 oder 3, in der das entgegenwirkende Element (5) ein bewegbarer Schieber (5) mit einem oder mehreren Sperrzähnen (6) an einem Ende ist, die als die ersten entgegenwirkenden Flächen wirken.

5. Vorrichtung (1) gemäß Anspruch 1, 2 oder 3, in der das entgegenwirkende Element (5) ein drehgelenkiger Hebel mit einem oder mehreren Sperrzähnen (6) an einem Ende ist, die als die ersten entgegenwirkenden Flächen wirken.

6. Vorrichtung (1) gemäß einem der vorhergehenden Ansprüche, in der die Verriegelungsmittel (8) einen Nocken (8) und/oder einen Keil und/oder Hebel umfassen, die auf eine Betätigungsfläche (9) des entgegenwirkenden Elements (5) einwirken.

7. Vorrichtung (1) gemäß einem der vorhergehenden Ansprüche, in der die Verriegelungsmittel (8) Handbetätigungsmittel (15) umfassen.

8. Vorrichtung (1) gemäß einem der vorhergehenden Ansprüche, umfassend Anzeigemittel (11), um die Verriegelung und Lösestellung des entgegenwirkenden Elements (5) anzuzeigen.

9. Vorrichtung (1) gemäß Anspruch 8, in der die Anzeigemittel einen sichtbaren Stellungszeiger (11) umfassen, der mit den Verriegelungsmitteln (8) verbunden ist.

10. Vorrichtung (1) gemäß einem der vorhergehenden Ansprüche, umfassend ein Gehäuse (12), das mit dem Bestandteil (3) verbunden oder verbindbar ist, worin das Gehäuse wenigstens teilweise das Verriegelungsmittel (8) und das wenigstens eine entgegenwirkende Element (5) aufnimmt, worin das Gehäuse (12) eine Führung für die Bewegung des,entgegenwirkenden Elements (5) bildet.

11. Vorrichtung (1) gemäß Anspruch 10, in der die Verriegelungsmittel einen Nocken (8) umfassen, der drehbar gelagert ist und die Drehung zusammen mit einem Betätigungsknopf (15) ausführt, der auf der Außenseite des Gehäuses (12) angeordnet ist.

12. Vorrichtung (1) gemäß Anspruch 11, in der der Knopf (15) einen Zeiger (11) zur Anzeige der Drehstellung des Nockens (8) aufweist, und geeignete Bezugsmarkierungen (17) in den Eingriffs- und Lösestellungen auf dem Gehäuse (12) vorgesehen sind.

13. Vorrichtung (1) gemäß einem der vorhergehenden Ansprüche, umfassend zwei entgegenwirkende Elemente (5), die so angeordnet sind, dass ihre Betätigungsflächen (9) simultan durch dasselbe Verriegelungsmittel (8) betätigt werden.

14. Vorrichtung (1) gemäß Anspruch 13, in der jedes der zwei entgegenwirkenden Elemente (5) es ermöglicht, ein Lösen der zugehörigen Mutter (2) zu verhindern.

15. Vorrichtung (1) gemäß Anspruch 13 oder 14, in der die Betätigungsflächen (9) der zwei entgegenwirkenden Elemente (5) sich mit einem Spalt dazwischen zugewandt sind, und das Verriegelungsmittel (8) zwischen den Betätigungsflächen (9) angeordnet ist.

16. Vorrichtung (1) gemäß Anspruch 15, in der das elastische Mittel wenigstens eine zusammengedrückte Feder (10) umfasst, die an den Betätigungsflächen (9) anliegt, um die entgegenwirkenden Elemente (5) auseinander zu halten und sie in ihre Eingriffsstellung zu drücken.

17. Vorrichtung (1) gemäß Anspruch 16, in der zwei elastische Federn (10) vorhanden sind, die an zwei gegenüberliegenden Seiten des Verriegelungsmittels (8) zwischen den Betätigungsflächen (9) angeordnet sind.

18. Vorrichtung (1) gemäß einem der vorhergehenden Ansprüche, die von Anspruch 3 abhängig sind, in der die elastischen Mittel (10) eine elastische Kraft bereitstellen, die die erste entgegenwirkende Fläche (6) gegen die zweite entgegenwirkende Fläche (7) drücken, und wobei die entgegenwirkenden Flächen (6, 7) Steigungen aufweisen, die das Anschrauben und/oder Losschrauben der Mutter (2) mit einem Klickvorgang gestatten.

19. Vorrichtung (1) gemäß einem der vorhergehenden Ansprüche, umfassend die Mutter (2), wobei die Mutter (2) die wenigstens eine zweite entgegenwirkende Fläche (7) umfasst, die effektiv komplementär zur ersten entgegenwirkenden Fläche (6) ist.

20. Vorrichtung (1) gemäß Anspruch 19, worin die Mutter (2) einen verzahnten Ring (16) umfasst, die die zweite entgegenwirkende Fläche (7) bildet.

21. Vorrichtung (1) gemäß Anspruch 20, in der der verzahnte Ring (16) auf einer Stirnfläche des ringförmigen Körpers der Mutter (2) ausgebildet ist und der ersten entgegenwirkenden Fläche (6) des entgegenwirkenden Elements (5) der Vorrichtung (1) zugewandt ist.

22. Bestandteil (3) für ein System zur Beförderung oder Verteilung von Flüssigkeiten, wobei der Bestandteil mit einem röhrenförmigen Verbindungsende (4) und mit einer Anti-Losschraub-Vorrichtung (1) gemäß einem der Ansprüche 1 bis 18 versehen ist.

23. Bestandteil (3) gemäß Anspruch 22, wobei der Bestandteil ein Ventil (3) mit zwei, mit Gewinde versehenen, Verbindungsabschnitten (4), eins auf jeder Seite, ist und mit einer Anti-Losschraub-Vorrichtung (1) gemäß einem der Ansprüche 13 bis 18 versehen ist.

24. Bestandteil entweder gemäß Anspruch 22 oder 23, umfassend eine oder mehrere Anti-Losschraub-Vorrichtungen (1) mit Muttern gemäß Anspruch 19 bis 21.

25. Vorrichtung (1) gemäß Anspruch 19, worin wenigstens eine der entgegenwirkenden Flächen (6) und (7) sich im Wesentlichen entlang des Umfangs der Mutter (2) erstrecken, um zu ermöglichen, dass die entgegenwirkenden Flächen (6, 7) in unterschiedlichen Drehstellungen der Mutter (2) in Eingriff stehen.

## Revendications

1. Dispositif anti-dévissage (1) pour une connexion par écrou des extrémités tubulaires de deux composants (3) dans des systèmes pour transporter ou distribuer des fluides, dans lequel un écrou (2) est fixé à l'extrémité tubulaire de l'un des composants, et capable d'être vissé sur l'extrémité tubulaire de l'autre composant, pour connecter lesdites extrémités,
dans lequel ledit dispositif anti-dévissage (1) est connectable à l'un des composants (3) et comprend :
- au moins un élément en opposition (5) possédant au moins une première surface en opposition (6) qui est effectivement complémentaire d'une seconde surface en opposition (7) formée sur ledit écrou (2), ledit élément en opposition (5) étant mobile d'une position engagée dans laquelle la première surface en opposition (6) s'engage avec la seconde surface en opposition (7), empêchant que l'écrou (2) ne se desserre, à une position désengagée dans laquelle l'écrou (2) peut être défait, et vice versa ; et
- un moyen élastique (10) capable de pousser élastiquement ledit élément en opposition (5) dans ladite position engagée ;
- un moyen de blocage (8) agissant sur l'élément en opposition (5) pour le bloquer dans ladite position engagée.

2. Dispositif (1) selon la revendication 1, dans lequel le moyen élastique (10) agit sur ledit élément en opposition (5) qui est constamment élastiquement poussé dans ladite position engagée.

3. Dispositif (1) selon la revendication 1 ou 2, comprenant un moyen élastique (10) capable de pousser élastiquement ledit élément en opposition (5) dans ladite position engagée.

4. Dispositif (1) selon la revendication 1, 2 ou 3, dans lequel ledit élément en opposition (5) est une glissière mobile (5) avec une ou plusieurs dent(s) d'arrêt (6) sur une extrémité et agissant en tant que lesdites premières surfaces en opposition.

5. Dispositif (1) selon la revendication 1, 2 ou 3, dans lequel ledit élément en opposition (5) est un levier pivotant avec une ou plusieurs dent(s) d'arrêt sur une extrémité et agissant en tant que lesdites premières surfaces en opposition.

6. Dispositif (1) selon l'une quelconque des revendications précédentes, dans lequel ledit moyen de blocage (8) comprend une came (8) et/ou un coin et/ou un levier agissant sur une surface d'actionnement (9) de l'élément en opposition (5).

7. Dispositif (1) selon l'une quelconque des revendications précédentes, dans lequel ledit moyen de blocage (8) comprend un moyen manuel d'actionnement (15).

8. Dispositif (1) selon l'une quelconque des revendications précédentes, comprenant un moyen indicateur (11) pour indiquer le blocage et le désengagement de l'élément en opposition (5).

9. Dispositif (1) selon la revendication 8, dans lequel ledit moyen indicateur comprend un pointeur de position visuel (11) connecté au moyen de blocage (8).

10. Dispositif (1) selon l'une quelconque des revendications précédentes, comprenant un logement (12) connecté ou connectable audit composant (3), dans lequel ledit logement reçoit au moins partiellement ledit moyen de blocage (8) et ledit au moins un élément en opposition (5), dans lequel le logement (12) forme un guide pour le mouvement de l'élément en opposition (5).

11. Dispositif (1) selon la revendication 10, dans lequel ledit moyen de blocage comprend une came (8) qui est supportée en rotation et est intégrée en rotation avec un bouton moleté d'actionnement (15) situé sur l'extérieur dudit logement (12).

12. Dispositif (1) selon la revendication 11, dans lequel ledit bouton moleté (15) a un pointeur (11) pour indiquer la position de rotation de la came (8), et des marques de référence appropriées (17) sont prévues, dans les positions engagée et désengagée, sur ledit logement (12).

13. Dispositif (1) selon l'une quelconque des revendications précédentes, comprenant deux éléments en opposition (5) agencés de telle manière que leurs surfaces d'actionnement (9) sont actionnées simultanément par le même moyen de blocage (8).

14. Dispositif (1) selon la revendication 13, dans lequel chacun des deux éléments en opposition (5) est capable d'empêcher qu'un écrou respectif (2) ne se desserre.

15. Dispositif (1) selon la revendication 13 ou 14; dans lequel les surfaces d'actionnement (9) desdits deux éléments en opposition (5) sont face à face avec un espace entre elles et ledit moyen de blocage (8) est agencé entre lesdites surfaces d'actionnement (9).

16. Dispositif (1) selon la revendication 15, dans lequel ledit moyen élastique comprend au moins un ressort compressé (10) en butée contre lesdites surfaces d'actionnement (9) pour maintenir les éléments en opposition (5) espacés et les pousser vers leurs positions engagées.

17. Dispositif (1) selon la revendication 16, dans lequel il y a deux ressorts (10) agencés sur deux côtés opposés du moyen de blocage (8) entre lesdites deux surfaces d'actionnement (9).

18. Dispositif (1) selon l'une quelconque des revendications précédentes, dépendant de la revendication 3, dans lequel ledit moyen élastique (10) offre une force élastique poussant les premières surfaces en opposition (6) contre les secondes surfaces en opposition (7), et lesdites surfaces en opposition (6, 7) ont des pentes de manière à permettre que l'écrou (2) soit vissé et/ou dévissé avec une action d'encliquetage.

19. Dispositif (1) selon l'une quelconque des revendications précédentes, comprenant l'écrou (2), ledit écrou (2) comprenant l'au moins une seconde surface en opposition (7) qui est effectivement complémentaire d'une première surface en opposition (6).

20. Dispositif (1) selon la revendication 19, dans lequel l'écrou (2) comprend une bague dentée (16) formant ladite seconde surface en opposition (7).

21. Dispositif (1) selon la revendication 20, dans lequel ladite bague dentée (16) est formée sur une surface frontale du corps tubulaire de l'écrou (2), faisant face à ladite première surface en opposition (6) de l'élément en opposition (5) du dispositif (1).

22. Composant (3) pour un système pour transporter ou distribuer des fluides, ledit composant étant doté d'une extrémité tubulaire de connexion (4) et d'un dispositif anti-dévissage (1) selon l'une quelconque des revendications 1 à 18.

23. Composant (3) selon la revendication 22, dans lequel ledit composant est une vanne (3) avec deux portions de connexion filetées (4), une de chaque côté, et un dispositif anti-dévissage (1) selon l'une des revendications 13 à 18.

24. Composant selon l'une ou l'autre des revendications 22 et 23, comprenant un ou plusieurs dispositif(s) anti-dévissage (1) avec des écrous (2) selon les revendications 19 à 21.

25. Dispositif (1) selon la revendication 19, dans lequel au moins une desdites surfaces en opposition (6) et (7) s'étend effectivement le long de la circonférence de l'écrou (2) pour permettre que les surfaces en opposition (6, 7) soient engagées dans différentes positions de rotation de l'écrou (2).
